# EUROPÄISCHE PATENTSCHRIFT

(11) **EP 1 775 822 B1**
(45) Veröffentlichungstag und Bekanntmachung des Hinweises auf die Patenterteilung: **16.11.2016**
(21) Anmeldenummer: 06020217.3
(22) Anmeldetag: 27.09.2006
(51) Int. Cl.: H02J 7/14, H02P 9/48

(54) **Verfahren und Vorrichtung zur geregelten Spannungsanhebung bei einer in einem Kraftfahrzeug vorgesehenen Stromerzeugungseinheit**
Method and apparatus for controlled voltage step-up in a power generating device of a vehicle
Procédé et dispositif pour élever la tension réglée d'un générateur dans un véhicule

(30) Priorität: 12.10.2005 DE 10548728
(43) Veröffentlichungstag der Anmeldung: 18.04.2007
(73) Patentinhaber: MAN Truck & Bus AG, 80995 München (DE)
(72) Erfinder: Eisermann, Günter, 85757 Karlsfeld (DE); Fink, Johannes, 85241 Hebertshausen (DE); Hackl, Andreas, 81671 München (DE)
(74) Vertreter: v. Bezold & Partner Patentanwälte - PartG mbB

(56) Entgegenhaltungen:
- DE-A1- 10 159 796
- DE-A1- 10 234 088
- DE-A1- 10 317 209

## Beschreibung

### Technisches Gebiet:

Die Erfindung betrifft eine Vorrichtung sowie ein Verfahren zur geregelten Spannungsanhebung bei einer in einem Kraftfahrzeug vorgesehenen Stromerzeugungseinheit, die elektrisch leitend mit einem Bordnetz des Kraftfahrzeugs sowie wenigstens einer Speichereinheit zur Speicherung elektrischer Ladungen verbunden ist, bei dem an der Speichereinheit eine Betriebsspannung gemessen und in Abhängigkeit der gemessenen Betriebsspannung in einer Regeleinheit eine Führungsgröße generiert wird, unter deren Zugrundelegung eine Lastausgangsspannung der Stromerzeugungseinheit variiert wird.

### Stand der Technik:

Die elektrische Anlage in Kraftfahrzeugen hat eine Vielzahl von Aufgaben, um den Fahrbetrieb sowie die Sicherheit und den Komfort zu gewährleisten. Zur elektrischen Anlage gehören hierbei eine Stromerzeugungseinheit mit einem Regler, eine Speichereinheit zur Speicherung elektrischer Ladungen, Bauteile und Leitungen zur Energieverteilung sowie die Verbraucher der elektrischen Energie. Um sämtliche Verbraucher ausreichend mit elektrischer Energie versorgen zu können, benötigt ein Kraftfahrzeug eine eigene, leistungsfähige Energiequelle. Diese Aufgabe übernimmt im Fahrbetrieb die Stromerzeugungseinheit, bei der es sich entweder um einen herkömmlich angetriebenen Generator oder auch andere alternative Einheiten, wie beispielsweise eine Brennstoffzelle, handeln kann. Neben der Versorgung der Verbraucher wird mit Hilfe der Stromerzeugungseinheit auch eine Speichereinheit zur Speicherung elektrischer Ladungen geladen, die bei abgeschaltetem Motor die Verbraucher, wie z. B. den Starter oder eine Innenraumbeleuchtung, mit elektrischer Energie versorgt.

Generell ist die in Kraftfahrzeugen vorhandene Anzahl elektrischer Komponenten in den letzten Jahren stetig gestiegen. Von dieser Entwicklung sind auch Nutzfahrzeuge, hier vor allem Omnibusse, betroffen. Bei Omnibussen ist hierbei insbesondere zu berücksichtigen, dass bei deren Betrieb im Stadtverkehr kurzen Fahrzeiten verhältnismäßig lange Ruhezeiten, beispielsweise an den Endhaltestellen, gegenüberstehen. Aus diesem Grund kommen vor allem in Nutzfahrzeugen, und hier vor allem in Omnibussen, immer häufiger mehrere Generatoren in einem Fahrzeug zum Einsatz.

In diesem Zusammenhang ist etwa aus der DE 101 597 96 A1 eine Stromversorgungseinrichtung mit zwei Stromerzeugungseinheiten und zwei Speichereinheiten in einem Nutzfahrzeug bekannt. Wesentlich bei der in dieser Druckschrift beschriebenen technischen Lösung ist, dass verschiedene Stromkreise im Kraftfahrzeug vorgesehen sind, die getrennt oder wahlweise gemeinsam betrieben werden.

Weiterhin ist aus der EP 1 102 381 A1 eine Spannungsregelung für den Drehstromgenerator eines Kraftfahrzeugs bekannt, die über einen Multifunktionsregler zur Regelung einer Generatorspannung und über einen zentralen Bordrechner, der die Klemmenspannung des Akkumulators, die Ausgangsspannung des Generators und die Drehzahl des Verbrenrrungsmotors als Eingangsmerkmale hat, verfügt. Die Regelung zeichnet sich in diesem Fall dadurch aus, dass die Spannungsvorgabe für den Multifunktionsregler zur Regelung der Ausgangsspannung des Generators vom zentralen Bordrechner erfolgt und dass auch die Werte der Klemmenspannung in den zentralen Bordrechner eingegeben werden. Dadurch, dass durch den zentralen Bordrechner die Spannungsvorgabe dem Multifunktionsregler vorgegeben bzw. "vorgetäuscht" wird, kann die Regelung der Generatorspannung bezogen auf den Fahrzeugtyp und den Betriebseinsatz flexibel gestaltet werden. Mit dieser Maßnahme soll die Akkumulatorlebensdauer verlängert und der Energiebedarf für die Stromversorgung des Fahrzeuges minimiert werden.

Problematisch bei den zuvor beschriebenen Stromerzeugungsanlagen für Kraftfahrzeuge ist allerdings, dass vor allem auf Grund fertigungstechnischer Toleranzen die in den Fahrzeugen eingesetzten Stromerzeugungseinheiten oftmals über unterschiedliche Leistungskennlinien verfügen. Dies kann dazu führen, dass die verschiedenen Stromkreise eines Bordnetzes sowie die Speichereinheiten für elektrische Energie jeweils ungleichmäßig mit Strom versorgt werden, so dass auch eine ausreichende Ladung der Speichereinheiten nicht möglich ist. Dieses Problem wird vor allem dann verschärft, wenn bei einer Wartung eine von mehreren in einem Fahrzeug vorgesehenen Stromerzeugseinheiten ausgetauscht wird. Mit den aus dem Stand der Technik bekannten Regelungssystemen ist es insbesondere nicht möglich, dass bei der Spannungsregelung die unterschiedlichen Kennlinien der Stromerzeugungseinheiten berücksichtigt werden.

Ferner ist aus der DE 103 17 209 A1 eine Einrichtung und ein Verfahren zur Regelung eines elektrischen Generators in einem Fahrzeug bekannt, um eine größere Stabilität des Bordnetzes, insbesondere in Bezug auf eine möglichst konstante Bordspannung bei wechselnder Belastung, zu gewährleisten. Hierbei wird in einem Speicher des Reglers für den Generator ein zweckmäßiger Verlauf von Betriebskenngrößen, wie z.B. Generatormoment in Abhängigkeit von der Drehzahl des Generators, abgespeichert. Der aktuelle Arbeitspunkt des Generators wird gemessen, mit den abgespeicherten Betriebskenngrößen verglichen und sodann entsprechend eingestellt.

Aus der DE 102 34 088 A1 ist ein Verfahren zur spannungs- und fahrdynamikabhängigen Regelung eines Drehstromgenerators in einem Fahrzeug bekannt. Der Generator wird von der Verbrennungskraftmaschine angetrieben und dient unter anderem zur Speisung des Bordnetzes und zur Aufladung der Fahrzeugbatterie. Um die Auswirkungen von Verbrauchern, die hohe elektrische Leistung aufnehmen, im Hinblick auf Auswirkungen des Generators auf die Verbrennungskraftmaschine zu minimieren, wird eine Load-Response-Funktion dargestellt, die abhängig von der Spannung im Bordnetz des Fahrzeugs, des Betriebszustandes der Verbrennungskraftmaschine und der Fahrsituation des Fahrzeugs ist.

Ausgehend von dem bekannten Stand der Technik und den zuvor geschilderten Problemen liegt der Erfindung die Aufgabe zugrunde, eine Vorrichtung sowie ein Verfahren zur geregelten Spannungsanhebung bei einer in einem Kraftfahrzeug vorgesehenen Stromerzeugungseinheit derart weiterzubilden, dass beim Betrieb der Anlage in einem Kraftfahrzeug die Kennlinie der darin vorgesehenen Stromerzeugungseinheit berücksichtigt wird. Weiterhin soll es möglich sein, mit einem derartigen System nach einem erneuten Motorstart eine einfache Kalibrierung der Stromerzeugungsanlage in einem Kraftfahrzeug vorzunehmen, selbst wenn mehrere Stromerzeugungseinheiten vorgesehen sind und / oder eventuell ein Austausch oder eine Reparatur einer Stromerzeugungseinheit stattgefunden hat.

Die vorstehend genannte Aufgabe wird mit einem Verfahren gemäß Anspruch 1 sowie einer Vorrichtung mit den in Anspruch 12 angegebenen Merkmalen gelöst. Vorteilhafte Weiterbildungen der Erfindung sind Gegenstand der Unteransprüche und werden in der folgenden Beschreibung unter Bezugnahme auf die Figuren näher erläutert.

Erfindungsgemäß ist ein Verfahren zur geregelten Spannungsanhebung bei einer in einem Kraftfahrzeug vorgesehenen Stromerzeugungseinheit, die elektrisch leitend mit einem Bordnetz des Kraftfahrzeugs sowie wenigstens einer Speichereinheit zur Speicherung elektrischer Ladungen verbunden ist, bei dem an der Speichereinheit eine Betriebsspannung gemessen und in Abhängigkeit der gemessenen Betriebsspannung in einer Regeleinheit eine Führungsgröße generiert wird, unter deren Zugrundelegung eine Lastausgangsspannung der Stromerzeugungseinheit variiert wird derart weitergebildet worden, dass sobald die Betriebsspannung an der Speichereinheit um einen Spannungsdifferenzbetrag sinkt, als Führungsgröße ein Spannungswert generiert wird, indem die Führungsgröße um den Spannungsdifferenzbetrag verringert wird.

Mit dem erfindungsgemäßen Verfahren ist es somit auf bevorzugte Weise möglich, das Absinken der Betriebsspannung auszugleichen, indem die Lastausgangsspannung der Stromerzeugungseinheit in Abhängigkeit der Führungsgröße angehoben wird. Vorzugsweise wird hierbei die Lastausgangsspannung um den Spannungsdifferenzbetrag angehoben.

In einer besonderen Ausführungsform der Erfindung erfolgt die Spannungserhöhung bei einem vom Fahrzeugmotor angetriebenem Generator über einen Multifunktionsregler, der über einen so genannten B_{Sens}-Ausgang verfügt, über den die Führungsgröße an den Generator übertragen wird. Vorteilhafterweise kann weiterhin durch den Einsatz einer zusätzlichen Steuerelektronik mit getrennten B_{Sens}-Eingängen mittels eines Operationsverstärkers eine Referenzspannung bezogen auf die an der Speichereinheit erfasste Betriebsspannung bereitgestellt werden.

Eine weitere vorteilhafte Ausführungsform sieht vor, dass nach einem Motorstart des Kraftfahrzeugs die Lastausgangsspannung der Stromerzeugungseinheit auf eine Minimalaus-gangsspannung heruntergefahren wird und eine minimale Betriebsspannung an der Speichereinheit erfasst wird. Vorteilhaft erfolgt die weitere Verarbeitung des erfassten Wertes erst, wenn sich der Wert für die Betriebsspannung stabilisiert hat, also innerhalb eines bestimmten Toleranzintervalls liegt. In diesem Zusammenhang ist es denkbar, dass nach einem Motorstart ein oder mehrere in einem Kraftfahrzeug befindliche Stromerzeugungseinheiten kalibriert werden. Vorzugsweise erfolgt eine derartige Kalibrierung bei Erstinbetriebnahme eines Steuergerätes bzw. Neueinbau oder Austausch einer Stromerzeugungseinheit.

In einer ganz besonderen Ausführungsform der Erfindung wird das erfindungsgemäße Verfahren bei wenigstens zwei im Kraftfahrzeug vorgesehenen Stromerzeugungseinheiten nach einem Motorstart des Kraftfahrzeugs durchgeführt. Hierbei werden die Lastausgangsspannungen der wenigstens zwei Stromerzeugungseinheiten zunächst auf eine Minimalausgangsspannung heruntergefahren. Im Anschluss an das Herunterfahren der Lastausgangsspannung der wenigstens zwei Stromerzeugungseinheiten auf die Minimalausgangsspannung werden die Stromerzeugungseinheiten jeweils nacheinander derart hochgefahren, dass ein vorgegebener Wert für die Betriebsspannung erreicht wird, wobei nunmehr jeweils die bei Erreichen des vorgegebenen Wertes für die Betriebsspannung generierte Führungsgröße mit der Betriebsspannung als Wertepaar in einem Speicher abgespeichert werden. Die Abspeicherung erfolgt vorzugsweise, nachdem sich die Betriebsspannung stabilisiert hat, also in einem vorgegebenen Toleranzbereich liegt. Genauso ist es denkbar, den für die weitere datentechnische Verarbeitung vorgesehenen Wert nach Verstreichen einer bestimmten Zeitspanne zu erfassen.

Eine weitere ganz spezielle Ausführungsform der Erfindung sieht vor, dass die Erfassung der Betriebsspannung mit einer Abtastrate erfolgt, die größer als die Oberwelligkeit der jeweils zu kalibrierenden Stromerzeugungseinheit ist. Auf diese Weise wird sichergestellt, dass keine Spannungsschwankungen, die lediglich durch die Oberwelligkeit der Stromerzeugungseinheit bedingt sind, eine Messung und somit auch die Kalibrierung verfälschen. Darüber hinaus ist vorzugsweise vorgesehen, die erfassten Werte für die Betriebsspannung zu mitteln und/oder eine Fehlerkorrektur, etwa mittels Ermittlung einer Standardabweichung oder Berechnung der linearen Regression, durchzuführen. Insgesamt führt die Kalibrierung der wenigstens zwei Stromerzeugungseinheiten zu einer Homogenisierung der Lastabgabe.

Neben einem Verfahren betrifft die Erfindung weiterhin eine Vorrichtung zur geregelten Spannungsanhebung bei einer in einem Kraftfahrzeug vorgesehenen Stromerzeugungseinheit, die elektrisch leitend mit einem Bordnetz des Kraftfahrzeugs sowie wenigstens einer Speichereinheit zur Speicherung elektrischen Ladungen verbunden ist, die über einen an der Speichereinheit vorgesehenen Sensor mit dem eine an der Speichereinheit herrschende Betriebsspannung erfasst wird, und über eine Regeleinheit verfügt, durch die unter Zugrundelegung der gemessenen Betriebsspannung eine Lastausgangsspannung der Stromerzeugungseinheit variiert wird. Wesentlicher Gedanke der erfindungsgemäßen Vorrichtung ist, dass die Regeleinheit derart ausgeführt ist, dass sobald die Betriebsspannung an der Speichereinheit um einen Spannungsdifferenzbetrag absinkt, als Führungsgröße ein Spannungswert generiert wird, indem die Führungsgröße um den Spannungsdifferenzbetrag verringert wird. Als Regeleinheit wird hierbei vorzugsweise ein Multifunktionsregler vorgesehen, der über einen Bₛₑₙₛ-Ausgang verfügt, an den die Stromerzeugungseinheit angeschlossen ist und über den der Stromerzeugungseinheit ein Spannungswert als Führungsgröße vorgegeben wird. Durch Variation der über den Bₛₑₙₛ-Ausgang an die Stromerzeugungseinheit übertragenen Führungsgröße ist die Betriebsweise und insbesondere die Lastausgangsspannung der Stromerzeugungseinheit regelbar.

Mit der beschriebenen Vorrichtung ist es auf vorteilhafte Weise möglich eine Stromerzeugungseinheit bzw. ein Steuergerät bei der Erstinbetriebnahme derart zu kalibrieren, dass der Stromerzeugungseinheit zur Erhöhung der Lastausgangsspannung sowie der Betriebsspannung an der Speichereinheit über den Bₛₑₙₛ-Ausgang um einen Spannungsdifferenzbetrag verringerter Spannungswert als Führungsgröße vorgegeben wird. Die Größe des Spannungsdifferenzbetrags wird hierbei derart festgelegt, dass er einer gewünschten Anhebung der Lastausgangsspannung bzw. der Betriebsspannung an der Speichereinheit entspricht. Auf diese Weise wird eine Homogenisierung der Lastabgabe der Stromerzeugungseinheit erreicht.

Im Folgenden wird die Erfindung ohne Beschränkung des allgemeinen Erfindungsgedankens unter Bezugnahme auf die Figur näher erläutert.

Es zeigt:
- Fig. 1:: Ablaufschema eines Kalibriervorgangs von im Kraftfahrzeug vorgesehenen Generatoren;
- Fig. 2:: Schaltplan einer Stromerzeugungseinheit mit Regler und Speichereinheit.

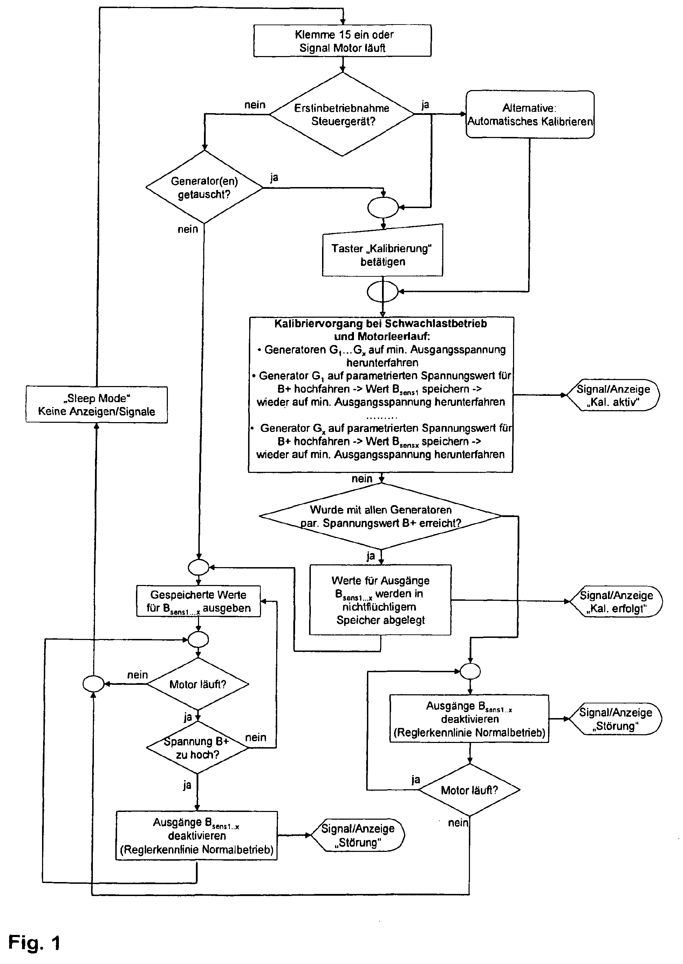

Die Figur 1 zeigt ein Ablaufschema eines Kalibriervorgangs, wie er in einem Bus, der über mehrere von einem Verbrennungsmotor angetriebene, in diesem Fall als Stromerzeugseinheiten 3 eingesetzte Generatoren verfügt, nach einem Motorstart durchgeführt werden kann. Nach einem Motorstart generiert die Fahrzeugsteuerung 1 ein Signal, das an ein Steuergerät 2 übermittelt wird. Innerhalb des Steuergeräts 2 wird anhand eines Entscheidungskriteriums je nach dem ob es sich um eine Erstinbetriebnahme des Steuergerätes handelt oder nicht entschieden, ob möglicherweise eine Kalibrierung erfolgt. Handelt es sich um eine Erstinbetriebnahme des Steuergerätes 2, so wird alternativ eine automatische oder eine manuell eingeleitete Kalibrierung gestartet. Sofern es sich nicht um eine Erstinbetriebnahme des Steuergerätes 2 handelt, erfolgt eine Kalibrierung lediglich, wenn wenigstens einer der im Fahrzeug eingesetzten Generatoren zwischenzeitlich ausgetauscht worden ist.

Während des Kalibriervorgangs werden die im Fahrzeug vorgesehenen Generatoren derart heruntergefahren, dass sich an der Batterie eine minimale Betriebsspannung einstellt. Anschließend werden die Generatoren jeweils einzeln auf einen parametrierten Spannungswert, der am Lastausgang des jeweiligen Generators anliegt, hochgefahren. Gleichzeitig wird der so genannte Bₛₑₙₛ-Wert der am Ausgang des Multifunktionsreglers zum Generator anliegt und eine Führungsgröße für die Generatorregelung darstellt, abgespeichert. Hierbei erfolgt die Abspeicherung des Bₛₑₙₛ-Werts, sobald sich der gemessene Betriebsspannungswert stabilisiert hat, also in einem vorgegebenen Toleranzbereich liegt und/oder über ein bestimmtes Zeitintervall innerhalb eines Toleranzbereichs liegt.

Sobald diese Messung abgeschlossen ist werden die Generatoren jeweils wieder auf minimale Ausgangsspannung heruntergefahren. Die entsprechenden Einstellungen der Generatoren bzw. die Erfassung der Lastausgangsspannung sowie des die Führungsgröße darstellenden Bₛₑₙₛ-Wertes am Multifunktionsregler wird für jeden Generator nacheinander durchgeführt. Im Anschluss an die für die verschiedenen Generatoren erfolgten Messungen wird überprüft, ob bei allen Generatoren die gemessenen Bₛₑₙₛ-Werte mit dem parametrierten Werten übereinstimmen. Sofern eine Übereinstimmung vorliegt werden die entsprechenden Werte für Bₛₑₙₛ als Führungsgrößen in einem nicht flüchtigen Speicher abgelegt.

In einer vorteilhaften Ausgestaltung der Erfindung wird bei der nacheinander erfolgenden Messung wenigstens zweier Generatoren der Wert für die gemessene Lastausgangsspannung des ersten Generators in einem Steuergerät als Sollwert hinterlegt. Die Parametrierung des oder der weiteren Generatoren erfolgt daraufhin, indem der bzw. die Generatoren auf die im Steuergerät hinterlegten Sollwert für die Lastausgangsspannung hochgefahren werden.

Sofern bei der Erfassung der Betriebsspannung an der Speichereinheit festgestellt wird, dass die Betriebsspannung einen unzulässigen, insbesondere einen zu hohen wert annimmt, so wird der Bₛₑₙₛ-Ausgang deaktiviert und die Stromerzeugungseinheit gemäß der voreingestellten Kennlinien betrieben. Es findet somit keine Regelung mehr über die Bₛₑₙₛ-Werte statt, so dass auch keine Variation der vorgegebenen Kennlinien vorgenommen wird. Sollte darüber hinaus einmal ein Defekt am Steuergerät detektiert werden, so wird ebenfalls der Bₛₑₙₛ-Ausgang der Regeleinheit deaktiviert.

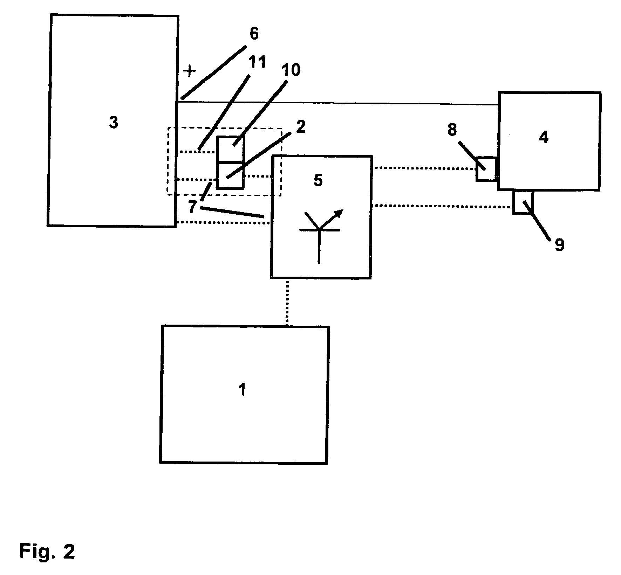

Die Fig. 2 zeigt die Verschaltung eines Generators 3 mit einer als Akkumulator ausgeführten Speichereinheit 4 zu Speicherung elektrischer Ladungen und mit einer als Multifunktionsregler ausgeführten Regeleinheit 5. Eine derartige Verschaltung kommt bspw. in einem Omnibus zum Einsatz. Der Lastausgang 6 des Generators 3 ist elektrisch leitend mit einem Akkumulator 4 verbunden. Ferner verfügt der Multifunktionsregler 5 über einen Bₛₑₙₛ-Ausgang 7, an den der Generator 3 angeschlossen ist und über den dieser mit einer den Generatorbetrieb beeinflussenden Führungsgröße versorgt wird.

Über eine an dem Akkumulator 4 vorgesehene Sensoreinheit 8 wird die dort anliegende Betriebsspannung gemessen. Dieser Spannungswert wird an den Multifunktionsregler 5 übertragen, in dem unter Zugrundelegung der gemessenen Betriebsspannung eine Führungsgröße generiert wird, die schließlich über den Bₛₑₙₛ-Ausgang 7 dem Generator 3 zur Regelung der Lastausgangsspannung vorgegeben wird. Wird nunmehr an den Generator 3 eine Last angelegt, bspw. beim Start des Motors, und an dem Akkumulator 4 eine gegenüber einem vorgegebenen Wert niedrigere Spannung gemessen, so generiert der Multifunktionsregler 5 als Führungsgröße einen Spannungswert, der ebenfalls gegenüber einem voreingestellten Wert um den an dem Akkumulator 4 gemessenen Spannungsdifferenzbetrag abgesenkt ist. Wird dem Generator 3 ein derart verminderter Spannungswert über den Bₛₑₙₛ-Ausgang 7 des Multifunktionsreglers 5 vorgegeben, reagiert der Generator 3 mit einer entsprechenden Anhebung der Spannung am Lastausgang 6, die das Absinken der Betriebsspannung am Akkumulator 4 zumindest annähernd ausgleicht.

Ferner erhält der Multifunktionsregler 5 aus einer zentralen Fahrzeugsteuerung 1 ein Signal, das den Betriebszustand des Motors, also ob dieser läuft oder stillsteht, repräsentiert. Auf diese Weise wird sichergestellt, dass der Betriebsstrom bei stillstehendem Motor auf 0 A abgesenkt wird. Als optionale Funktion ist ferner eine Begrenzung der Spannungsanhebung am Lastausgang 6 des Generators 3 vorgesehen. Um bestimmte elektrische Verbraucher, insbesondere Glühlampen, vor einer zu hohen Spannung im Stromkreis zu schützen, sind im Multifunktionsregler 5 Grenzwerte hinterlegt, durch die sichergestellt wird, dass der Bₛₑₙₛ-Wert, der dem Generator 3 vorgegeben wird, nicht unter einen unteren Sicherheitswert fällt. Genauso sind in dem Multifunktionsregler bzw. einem Steuergerät obere Grenzwerte hinterlegt, bei deren Überschreitung der Bₛₑₙₛ-Ausgang deaktiviert wird.

Eine weitere optionale Ausführungsform sieht eine zusätzliche Steuerelektronik 2 mit getrennten Bₛₑₙₛ-Ausgängen 7 und einen Operationsverstärker 10 vor, so dass über den Operationsverstärker 10 in Abhängigkeit der an dem Akkumulator 4 gemessenen Betriebsspannung auch eine Referenzspannung über einen entsprechenden Ausgang 11 ausgegeben werden kann.

In jedem Fall ist es denkbar, die am Lastausgang des Generators anliegende Spannung entweder in festen Stufen oder gleitend auf einen Wert zwischen 25,7 V und 30 V einzustellen. Wird zusätzlich noch ein Temperatursensor am Akkumulator vorgesehen, so kann zusätzlich die Spannungsregelung am Lastausgang des Generators in Abhängigkeit der mit dem Temperatursensor gemessenen Temperatur beeinflusst werden. Darüber hinaus besteht die Möglichkeit, die Spannung nach einem Motorstart und/oder in Abhängigkeit der Außentemperatur zumindest zeitweise zusätzlich zu erhöhen. Für eine derartige zusätzliche Spannungserhöhung ist weiterhin die Vorgabe einer bestimmten Zeitspanne denkbar.

### Bezugszeichenliste

- 1: Fahrzeugsteuerung
- 2: Steuergerät
- 3: Stromerzeugungseinheit
- 4: Speichereinheit
- 5: Regeleinheit
- 6: Lastausgang
- 7: Bₛₑₙₛ-Ausgang
- 8: Spannungssensor
- 9: Temperatursensor
- 10: Operationsverstärker
- 11: Referenzspannungsausgang

## Patentansprüche

1. Verfahren zur geregelten Spannungsanhebung bei einer in einem Kraftfahrzeug vorgesehenen Stromerzeugungseinheit (3), die elektrisch leitend mit einem Bordnetz des Kraftfahrzeugs sowie wenigstens einer Speichereinheit (4) zur Speicherung elektrischer Ladungen verbunden ist, bei dem an der Speichereinheit (4) eine Betriebsspannung gemessen und in Abhängigkeit der gemessenen Betriebsspannung in einer Regeleinheit (5) eine Führungsgröße generiert wird, unter deren Zugrundelegung eine Lastausgangsspannung der Stromerzeugungseinheit (3) variiert wird, **dadurch gekennzeichnet, dass** sobald die Betriebsspannung an der Speichereinheit (4) um einen Spannungsdifferenzbetrag absinkt, als Führungsgröße ein Spannungswert generiert wird, indem die Führungsgröße um den Spannungsdifferenzbetrag verringert wird.

2. Verfahren nach Anspruch 1, **dadurch gekennzeichnet, dass** bei Absinken der Betriebsspannung die Lastausgangsspannung der Stromerzeugungseinheit (3) in Abhängigkeit der Führungsgröße angehoben wird.

3. Verfahren nach Anspruch 1 oder 2, **dadurch gekennzeichnet, dass** die Lastausgangsspannung um den Spannungsdifferenzbetrag angehoben wird.

4. Verfahren nach einem der Ansprüche 1 bis 3, **dadurch gekennzeichnet, dass** nach einem Motorstart des Kraftfahrzeugs die Lastausgangsspannung der Stromerzeugungseinheit (3) auf eine Minimalausgangsspannung heruntergefahren wird und eine minimale Betriebsspannung an der Speichereinheit (4) erfasst wird.

5. Verfahren nach Anspruch 4, **dadurch gekennzeichnet, dass** ein sich bei einer Minimalausgangsspannung der Stromerzeugungseinheit (3) einstellender minimaler Wert der erfassten Betriebsspannung mit der gleichzeitig generierten Führungsgröße als Wertepaar in einer Speichereinheit abgespeichert wird.

6. Verfahren nach den Ansprüchen 4 oder 5, **dadurch gekennzeichnet, dass** im Anschluss an das Herunterfahren der Lastausgangsspannung auf die Minimalausgangsspannung die Stromerzeugungseinheit (3) auf einen parametrierten Spannungswert, der am Lastausgang der Stromerzeugungseinheit (3) anliegt, hochgefahren wird, dass ein vorgegebener, gegenüber der minimalen Betriebsspannung erhöhter Wert für die Betriebsspannung erreicht wird.

7. Verfahren nach Anspruch6, **dadurch gekennzeichnet, dass** eine bei Erreichen des vorgegebenen Werts für die Betriebsspannung generierte Führungsgröße in einem Speicher abgespeichert wird.

8. Verfahren nach einem der Ansprüche 1 bis 3, **dadurch gekennzeichnet, dass** bei wenigstens zwei im Kraftfahrzeug vorgesehenen Stromerzeugungseinheiten (3) nach einem Motorstart des Kraftfahrzeugs die Lastausgangsspannung der wenigstens zwei Stromerzeugungseinheiten (3) auf eine Minimalausgangsspannung heruntergefahren wird, dass im Anschluss an das Herunterfahren der Lastausgangsspannung der wenigstens zwei Stromerzeugungseinheiten (3) auf die Minimalausgangsspannung eine erste der zwei Stromerzeugungseinheiten (3) auf einen parametrierten Spannungswert, der am Lastausgang der ersten Stromerzeugungseinheit (3) anliegt, hochgefahren wird, dass ein vorgegebener Wert für die Betriebsspannung erreicht wird, eine bei Erreichen des vorgegebenen Werts für die Betriebsspannung generierte Führungsgröße in einem Speicher abgespeichert wird und danach die erste Stromerzeugungseinheit (3) wieder auf die Minimalausgangsspannung heruntergefahren wird sowie dass im Anschluss an das Herunterfahren der ersten Stromerzeugungseinheit (3) auf die Minimalausgangsspannung die Verfahrensschritte Hochfahren der Stromerzeugungseinheit (3), Abspeichern einer generierten Führungsgröße und Herunterfahren der Stromerzeugungseinheit (3) für zumindest eine der übrigen im Kraftfahrzeug vorgesehenen Stromerzeugungseinheiten (3) wiederholt werden.

9. Verfahren nach Anspruch 8, **dadurch gekennzeichnet, dass** nach Hochfahren einer der Stromerzeugungseinheiten (3) auf einen vorgegebenen Wert für die Betriebsspannung die Führungsgröße erst generiert und abgespeichert wird, sobald die Betriebsspannung über ein voreinstellbares Zeitintervall innerhalb eines Toleranzbereiches liegt.

10. Verfahren nach einem der Ansprüche 1 bis 9, **dadurch gekennzeichnet, dass** wenigstens zwei Werte der erfassten Betriebsspannung gemittelt werden und/oder eine Fehlerkorrektur durchgeführt wird, bevor die Führungsgröße generiert wird.

11. Verfahren nach einem der Ansprüche 1 bis10, **dadurch gekennzeichnet, dass** bei der Erfassung der Betriebsspannung eine Abtastrate größer als die Oberwelligkeit zumindest einer Stromerzeugungseinheit gewählt wird.

12. Vorrichtung für ein Kraftfahrzeug zur Ausführung des Verfahrens gemäß einem der vorhergehenden Patentansprüche, umfassend
• eine Stromerzeugungseinheit (3), die elektrisch leitend mit einem Bordnetz des Kraftfahrzeugs sowie wenigstens einer Speichereinheit (4) zur Speicherung elektrischer Ladungen verbunden ist,
• eine an der Speichereinheit (4) vorgesehene Sensoreinheit (8), mit der eine an der Speichereinheit (4) herrschende Betriebsspannung erfasst wird, und
• eine Regeleinheit (5), durch die unter Zugrundelegung der gemessenen Betriebsspannung eine Lastausgangsspannung der Stromerzeugungseinheit (3) variiert wird,
- wobei die Regeleinheit Mittel zur Generierung einer Führungsgröße beinhaltet, und
- sobald die Betriebsspannung an der Speichereinheit (4) um einen Spannungsdifferenzbetrag absinkt, als Führungsgröße ein Spannungswert generiert wird, indem die Führungsgröße um den Spannungsdifferenzbetrag verringert wird.

## Claims

1. A method for controlled voltage boosting in a power generating unit (3) which is provided in a motor vehicle and which is electrically conductively connected to an on-board electrical system of the motor vehicle and at least one storage unit (4) for storing electrical charges, wherein an operating voltage is measured at the storage unit (4) and a reference variable is generated depending on the measured operating voltage in a control unit (5), a load output voltage of the power generating unit (3) being varied taking the reference variable as a basis, **characterized in that** as soon as the operating voltage at the storage unit (4) decreases by a voltage difference absolute value, as reference variable a voltage value is generated by the reference variable being reduced by the voltage difference absolute value.

2. The method according to Claim 1, **characterized in that** when the operating voltage decreases, the load output voltage of the power generating unit (3) is boosted depending on the reference variable.

3. The method according to Claim 1 or 2, **characterized in that** the load output voltage is boosted by the voltage difference absolute value.

4. The method according to any of Claims 1 to 3, **characterized in that** after an engine start of the motor vehicle, the load output voltage of the power generating unit (3) is ramped down to a minimum output voltage and a minimum operating voltage is detected at the storage unit (4).

5. The method according to Claim 4, **characterized in that** a minimum value of the detected operating voltage that is established in the event of a minimum output voltage of the power generating unit (3) is stored together with the simultaneously generated reference variable as a pair of values in a storage unit.

6. The method according to Claim 4 or 5, **characterized in that** after ramping down the load output voltage to the minimum output voltage, the power generating unit (3) is ramped up to a parameterized voltage value present at the load output of the power generating unit (3), **in that** a predefined value increased relative to the minimum operating voltage is attained for the operating voltage.

7. The method according to Claim 6, **characterized in that** a reference variable generated when the predefined value is attained for the operating voltage is stored in a memory.

8. The method according to any of Claims 1 to 3, **characterized in that** in the case of at least two power generating units (3) provided in the motor vehicle, after an engine start of the motor vehicle, the load output voltage of the at least two power generating units (3) is ramped down to a minimum output voltage, **in that** after ramping down the load output voltage of the at least two power generating units (3) to the minimum output voltage, a first of the two power generating units (3) is ramped up to a parameterized voltage value present at the load output of the first power generating unit (3), **in that** a predefined value is attained for the operating voltage, a reference variable generated when the predefined value is attained for the operating voltage is stored in a memory, and then the first power generating unit (3) is ramped down again to the minimum output voltage, and **in that** after ramping down the first power generating unit (3) to the minimum output voltage, the method steps of ramping up the power generating unit (3), storing a generated reference variable and ramping down the power generating unit (3) are repeated for at least one of the other power generating units (3) provided in the motor vehicle.

9. The method according to Claim 8, **characterized in that** after ramping up one of the power generating units (3) to a predefined value for the operating voltage, the reference variable is only generated and stored as soon as the operating voltage is within a tolerance range over a presettable time interval.

10. The method according to any of Claims 1 to 9, **characterized in that** at least two values of the detected operating voltage are averaged and/or an error correction is carried out before the reference variable is generated.

11. The method according to any of Claims 1 to 10, **characterized in that** a sampling rate greater than the harmonic content of at least one power generating unit is chosen when detecting the operating voltage.

12. A device for a motor vehicle for performing the method according to any of the preceding patent claims, comprising
• a power generating unit (3) which is electrically conductively connected to an on-board electrical system of the motor vehicle and to at least one storage unit (4) for storing electrical charges;
• a sensor unit (8) which is provided at the storage unit (4) and detects an operating voltage prevailing at the storage unit (4); and
• a control unit (5), which varies a load output voltage of the power generating unit (3) taking the measured operating voltage as a basis,
- wherein the control unit comprises means for generating a reference variable, and
- as soon as the operating voltage at the storage unit (4) decreases by a voltage difference absolute value, as reference variable a voltage value is generated by the reference variable being reduced by the voltage difference absolute value.

## Revendications

1. Procédé pour augmenter de manière régulée une tension dans une unité génératrice de courant (3) prévue dans un véhicule, qui est électriquement connectée à un réseau de bord du véhicule ainsi qu'à une unité à mémoire (4) destinée à stocker des charges électriques, dans lequel une tension de fonctionnement est mesurée au niveau de l'unité à mémoire (4) et une grandeur de référence est générée dans une unité de régulation (5) en fonction de la tension de fonctionnement mesurée, grandeur de référence sur la base de laquelle une tension de sortie de charge de l'unité génératrice de courant (3) est amenée à varier, **caractérisé en ce que**, dès que la tension de fonctionnement appliquée à l'unité à mémoire (4) s'abaisse d'une différence de tension, une valeur de tension est générée en tant que grandeur de référence en réduisant la grandeur de référence de la différence de tension.

2. Procédé selon la revendication 1, **caractérisé en ce que**, lors d'une diminution de la tension de fonctionnement, la tension de sortie de charge de l'unité génératrice de courant (3) est augmentée en fonction de la grandeur de référence.

3. Procédé selon la revendication 1 ou 2, **caractérisé en ce que** la tension de sortie de charge est augmentée de la différence de tension.

4. Procédé selon l'une quelconque des revendications 1 à 3, **caractérisé en ce qu'**après un démarrage du moteur du véhicule, la tension de sortie de charge de l'unité génératrice de courant (3) est abaissée à une tension de sortie minimale et une tension de fonctionnement minimale est détectée au niveau de l'unité à mémoire (4).

5. Procédé selon la revendication 4, **caractérisé en ce qu'**une valeur minimale de la tension de fonctionnement détectée s'établissant à une tension de sortie minimale de l'unité génératrice de courant (3) est stockée dans une unité à mémoire en association avec la grandeur de référence simultanément générée sous la forme d'une paire de valeurs.

6. Procédé selon la revendication 4 ou 5, **caractérisé en ce qu'**après l'abaissement de la tension de sortie de charge à la tension de sortie minimale, l'unité génératrice de courant (3) est élevée à une valeur de tension paramétrée qui est présente à la sortie de charge de l'unité génératrice de courant (3), de manière à ce qu'une valeur augmentée prédéterminée de la tension de fonctionnement soit atteinte par rapport à la tension de fonctionnement minimale.

7. Procédé selon la revendication 6, **caractérisé en ce qu'**une grandeur de référence générée lorsque la valeur prédéterminée de la tension de fonctionnement est atteinte est stockée dans une mémoire.

8. Procédé selon l'une quelconque des revendications 1 à 3, **caractérisé en ce que**, dans le cas où au moins deux unités génératrices de courant (3) sont prévues dans le véhicule, la tension de sortie de charge des au moins deux unités génératrices de courant (3), après le démarrage du moteur du véhicule, est abaissée à une tension de sortie minimale, **en ce que**, après l'abaissement de la tension de sortie de charge des au moins deux unités génératrices de courant (3) à la tension de sortie minimale, une première des deux unités génératrices de courant (3) est élevée à une valeur de tension paramétrée qui est présente à la sortie de charge de la première unité génératrice de courant (3) de manière à ce qu'une valeur prédéterminée de la tension de fonctionnement soit atteinte, une grandeur de référence générée est stockée dans une mémoire lorsque la valeur prédéterminée de la tension de fonctionnement est atteinte puis la première unité génératrice de courant (3) est de nouveau abaissée à la tension de sortie minimale et **en ce que**, après l'abaissement de la première unité génératrice de courant (3) à la tension de sortie minimale, les étapes du procédé consistant élever la tension de l'unité génératrice de courant (3), à stocker une grandeur de référence générée et à abaisser la tension de l'unité génératrice de courant (3) pour au moins l'une des unités génératrices de courant (3) restantes prévues dans le véhicule, sont répétées.

9. Procédé selon la revendication 8, **caractérisé en ce que**, après l'élévation de l'une des unités génératrices de courant (3) à une valeur prédéterminée de la tension de fonctionnement, la grandeur de référence est tout d'abord générée et stockée dès que la tension de fonctionnement se situe dans une certaine gamme de tolérance pendant un intervalle de temps pouvant être préréglé.

10. Procédé selon l'une quelconque des revendications 1 à 9, **caractérisé en ce qu'**au moins deux valeurs de la tension de fonctionnement détectée sont moyennées et/ou **en ce qu'**une correction d'erreur est effectuée avant de générer la grandeur de référence.

11. Procédé selon l'une quelconque des revendications 1 à 10, **caractérisé en ce que**, lors de la détection de la tension de fonctionnement, une fréquence d'échantillonnage supérieure aux harmoniques d'au moins une unité génératrice de courant, est sélectionnée.

12. Dispositif pour véhicule destiné à mettre en oeuvre le procédé selon l'une quelconque des revendications précédentes, comprenant
• une unité génératrice de courant (3) qui est électriquement connectée à un réseau de bord du véhicule ainsi qu'à une unité à mémoire (4) destinée à stocker des charges électriques,
• une unité de détection (8) prévue au niveau de l'unité à mémoire (4), au moyen de laquelle une tension de fonctionnement présente au niveau de l'unité à mémoire (4) est détectée, et
• une unité de régulation (5) au moyen de laquelle une tension de sortie de charge de l'unité génératrice de courant (3) est amenée à varier sur la base de la tension de fonctionnement mesurée,
- dans lequel l'unité de régulation comporte des moyens destinés à générer une grandeur de référence, et
- dès que la tension de fonctionnement appliquée à l'unité à mémoire (4) s'abaisse d'une différence de tension, une valeur de tension est générée en tant que grandeur de référence en réduisant la grandeur de référence de la différence de tension.
